# DEMANDE DE BREVET EUROPEEN

(11) **EP 0 620 624 A1**
(43) Date de publication de la demande: **19.10.1994**
(21) Numéro de dépôt: 94420118.5
(22) Date de dépôt: 13.04.1994
(51) Int. Cl.: H02B 1/50

(54) **Ensemble pour le basculement d'armoires de contrôle, escamotable en fosse**

(30) Priorité: 13.04.1993 FR 9304551
(71) Demandeur: COMMUNAUTE URBAINE DE LYON - COURLY, F-69003 Lyon (FR)
(72) Inventeur: Zimmermann, Monique, F-69001 Lyon (FR); Azema, Jean-Louis, F-69100 Villeurbanne (FR); Richard, André, F-69300 Caluire et Cuire (FR); Ogier, Pierre, F-69700 Montagny (FR); Rouby, Stéphane, F-69003 Lyon (FR); Pagani, Odile, F-69100 Villeurbanne (FR)
(74) Mandataire: Perrier, Jean-Pierre

(57) **Abrégé**

Cet ensemble est du type dans lequel au moins une armoire (2) est fixée contre la face interne d'un volet (7) articulé horizontalement sur le bord d'une fosse.

Selon l'invention, il comprend :
- d'une part, et pour chacune des fosses, un sous-ensemble amovible et interchangeable (8) qui, distinct du sous-ensemble (4, 5, 6) délimitant la fosse, sur lequel il est posé et fixé, est composé du volet (7) portant d'origine l'armoire et/ou d'autres organes techniques, de moyens moteurs (17) aptes à faire pivoter le volet (7) entre l'une et l'autre de ses positions extrêmes, respectivement, normale et escamotée ou temporaire et érigée, et de circuits (45, 46) assurant l'alimentation des moyens moteurs, à partir de moyens de raccordement (23), faisant partie du sous-ensemble (8) et accessibles depuis l'extérieur de la fosse
- et, d'autre part, un moyen (32) mobile entre les différentes fosses, commun à toutes ces fosses et portant une source d'énergie (32), un circuit d'alimentation muni de moyens de raccordement (43), complémentaires de ceux (23) des sous-ensembles (8), et des moyens de commande (34) de l'alimentation en énergie du circuit d'alimentation.

## Description

L'invention est relative à un ensemble pour le basculement d'armoires de contrôle, escamotable en fosse.

Elle concerne le domaine des armoires de contrôle, telles que les armoires de gestion des feux de signalisation d'un carrefour, les armoires de gestion de l'éclairage public, les armoires de connexion et/ou de dérivation électrique ou téléphonique, et, de manière générale, toutes les armoires ou boîtiers assurant des fonctions de connexion, de dérivation, de répartition, de commande, production ou de gestion de fluide, d'énergie ou de signaux électriques ou fluidiques.

Elle concerne plus particulièrement les armoires disposées à l'extérieur et, par exemple, sur les trottoirs des voies publiques.

De telles armoires forment des émergences gênantes ou disgracieuses, qui s'intègrent mal dans l'aménagement urbain actuel mettant en oeuvre des formes esthétiques, et tendant à débarrasser les espaces publics de tous éléments techniques visibles. Par ailleurs, ces armoires sont en général placées sur les trottoirs ou en bordure de ceux-ci et forment des obstacles pour les piétons et, en particulier, pour les enfants et les personnes handicapées.

L'un des objets de l'invention est de remédier à ces inconvénients en fournissant des moyens permettant de faire disparaître de la surface du sol toute armoire de contrôle, lorsqu'il n'est pas nécessaire d'y accéder pour des opérations de connexion, de contrôle, de réglage, ou de maintenance.

Il est déjà connu par FR-A 2 680 609, DE-A-2 144 810 et GB-A-1 402 267 de fixer un boîtier contre la face interne d'un volet articulé horizontalement sur le bord d'une fosse et de manière à pouvoir occuper une position escamotée, dans laquelle il obture l'ouverture de la fosse, avec l'armoire de commande à l'intérieur de celle-ci, et une position érigée, dans laquelle ce volet est sensiblement vertical avec l'armoire à l'extérieur et au-dessus de la fosse.

Ces solutions techniques concernent des boîtiers de connexion électrique assurant la jonction entre une source de courant arrivant dans la fosse et des dérivations disposées à l'extérieur de cette fosse. En conséquence, en position d'utilisation du boîtier, le volet est en position érigée, c'est-à-dire occupe une position inverse de celle recherchée par l'invention.

Dans ces solutions, le volet est basculé manuellement. Si le basculement manuel convient pour des boîtiers peu lourds, il ne peut pas être utilisé tel quel pour des armoires qui, plus volumineuses, comportent de nombreuses connexions et composants divers leur donnant un poids important. Par ailleurs, et si conformément aux normes et règlements en vigueur, le volet doit résister à des charges relativement élevées, il présente de ce fait un poids important. La manoeuvre de soulèvement du volet par l'effort humain devient alors dangereuse pour le personnel, voire impossible.

Un autre objet de l'invention est de fournir un ensemble pour le basculement d'une armoire de contrôle escamotable, facilitant les manoeuvres de basculement, tout en éliminant les risques pour le personnel et en limitant l'investissement.

On connaît par DE-A 2 242 894 un ensemble de protection enterrée pour armoires électriques dans laquelle les armoires sont fixées à une structure qui, pouvant soit être enterrée dans une fosse, soit être érigée au-dessus de cette fosse, est reliée à des moyens aptes à la déplacer entre ces deux positions et décrits comme étant hydrauliques, pneumatiques ou électriques. Dans cette application, concernant des installations lourdes et onéreuses, les moyens de commande des moyens moteurs sont inclus dans l'ensemble de sorte que pour empêcher leur actionnement par une personne non autorisée, il est nécessaire de doter l'ensemble de fermetures de sécurité, accroissant le coût de cet ensemble.

Un autre objet de l'invention est donc de fournir un ensemble de réception d'armoires ou équivalents n'exigeant aucune fermeture et serrure de sécurité et ne pouvant être amené de sa position normale et escamoté à sa position d'érection temporaire que par le personnel autorisé.

A cet effet, l'ensemble selon l'invention, du type à volet articulé comme décrit précédemment, comprend :
- d'une part, et pour chacune des fosses, un sous-ensemble amovible et interchangeable qui, distinct du sous-ensemble délimitant la fosse, sur lequel il est posé et fixé, est composé du volet portant d'origine l'armoire et/ou d'autres organes techniques, de moyens moteurs aptes à faire pivoter le volet entre l'une et l'autre de ses positions extrêmes, respectivement, normale et escamotée ou temporaire et érigée, et de circuits assurant l'alimentation des moyens moteurs, à partir de moyens de raccordement, faisant partie du sous-ensemble et accessibles depuis l'extérieur de la fosse
- et, d'autre part, un moyen mobile entre les différentes fosses, commun à toutes ces fosses et portant une source d'énergie, un circuit d'alimentation muni de moyens de raccordement, complémentaires de ceux des sous-ensembles, et des moyens de commande de l'alimentation en énergie du circuit d'alimentation.

Dans cet agencement, chaque volet est associé à des moyens moteurs provoquant ses mouvements de basculement entre sa position normale escamotée et sa position temporaire érigée, ou inversement, et la source d'énergie avec ses moyens de commande provoquant le fonctionnement de ses moyens moteurs ne sont pas inclus dans la fosse et font partie d'un ensemble mobile, extérieur à la fosse et pouvant être utilisé pour plusieurs fosses. Cette façon de procéder permet, d'une part, de réduire le coût de fabrication et d'installation du mécanisme de basculement associé à chaque fosse et, d'autre part, d'empêcher toute manoeuvre du volet de chaque fosse par des tiers ne possédant pas le moyen mobile portant la source d'énergie et les moyens de commande.

On notera que le moyen mobile selon l'invention se différencie de celui décrit dans WO-A-91/15895 par le fait qu'il porte également les moyens de commande déclenchant la mise en fonctionnement des moyens moteurs alimentés par la source qu'il porte.

Dans une forme d'exécution de l'invention, chaque volet est articulé sur un cadre et celui-ci est posé sur un épaulement interne qui est espacé du bord supérieur de ce caisson par une distance de valeur sensiblement égale à celle de l'épaisseur de ce cadre.

Le sous-ensemble ainsi constitué est indépendant de la fosse proprement dite, et peut donc très aisément être retiré de la fosse pour être réparé en atelier, en cas de défaillance des composants de l'armoire de contrôle ou des moyens moteurs du volet. De même, par exemple pour une armoire de gestion des feux tricolores d'un carrefour, l'armoire peut être réglée en atelier, avant sa mise en place définitive, afin de réduire le temps de l'interruption du contrôle des feux de signalisation.

Avantageusement, la profondeur totale du caisson est au plus de 60 cm, de manière que le fond de la fouille nécessaire soit au-dessus des réseaux déjà enterrés et que sa margelle forme surface d'assise pour un homme.

Ainsi, lorsqu'un volet est en position érigée, le technicien chargé de l'entretien de l'armoire de contrôle peut s'asseoir sur le bord de la margelle entourant la fosse, c'est-à-dire occuper une position confortable lui permettant d'accéder sans aucune difficulté aux composants de l'armoire disposés devant lui et à portée de main.

D'autres caractéristiques et avantages ressortiront de la description qui suit, en référence au dessin schématique annexé représentant, à titre d'exemple non limitatif, une forme d'exécution de cet ensemble.
Figure 1 est une vue en perspective éclatée avec coupe partielle de la fosse et de son volet,
Figure 2 est une vue en perspective de l'ensemble lorsque le volet est en position érigée et est associé aux moyens mobiles portant la source d'énergie de ses moyens moteurs,
Figure 3 est une vue de côté, en coupe transversale, d'une fosse lorsque le volet est en position érigée,
Figure 4 représente une forme d'exécution du schéma hydraulique des divers moyens provoquant le basculement du volet.

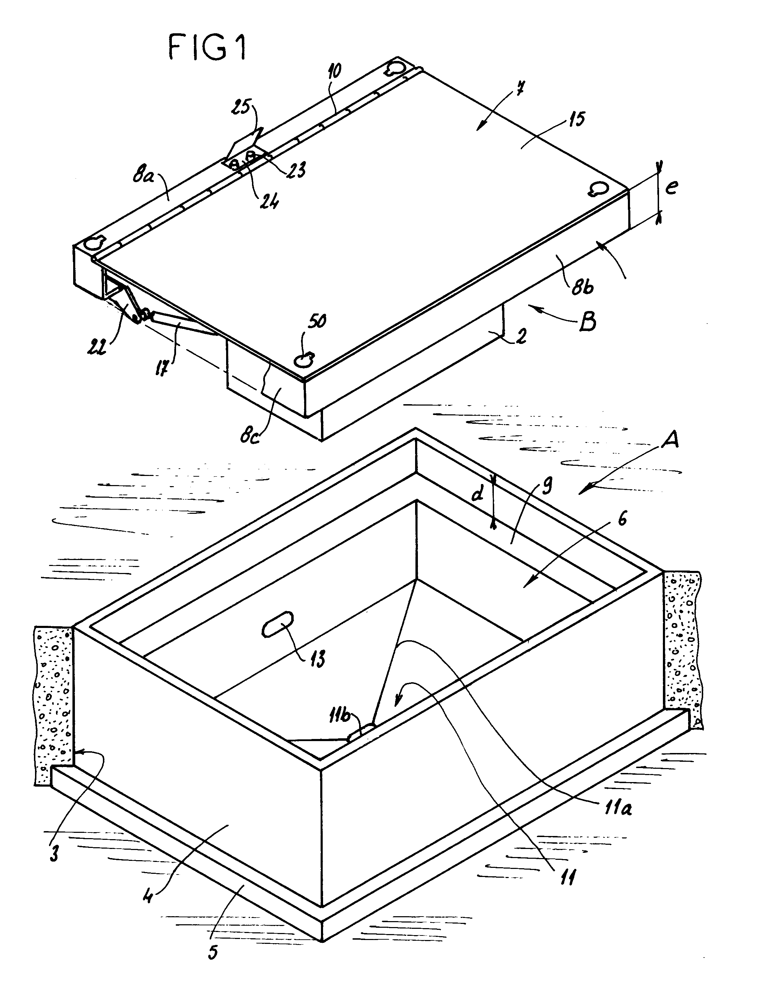

Comme montré à la figure 1, l'infrastructure pour au moins une armoire de contrôle 2 est composée de deux sous-ensembles, à savoir :
- un sous-ensemble A disposé dans une fouille 3 et composé d'un caisson 4,
- et un sous-ensemble B comprenant un volet 7, sur la face interne duquel est fixée au moins une armoire 2, un cadre 8 et les moyens 17 d'actionnement du volet 7.

Le caisson 4 est préfabriqué, en béton ou autre, et présente une forme extérieure telle que, après son enfouissement dans une fouille et compactage contre ses parois périphériques de la terre l'entourant, la résultante verticale des forces de retenue tende à le maintenir dans le sol. Dans la forme d'exécution représentée, le caisson est ceinturé par une collerette inférieure 5, mais les mêmes résultats peuvent être obtenus avec des parois présentant des gradins extérieurs ou allant en s'évasant vers la base.

La fosse 6 délimitée par le caisson est ceinturée par un épaulement 9. Son fond 11 est muni d'une forme en pente 11a dont les faces convergent vers un orifice 11b qui, muni d'un clapet anti retour, est raccordé au réseau d'évacuation des eaux, lorsque le caisson n'est pas posé sur un lit drainant. L'une des parois du caisson 4 est traversée par une ouverture 13 pour le passage étanche des circuits allant aux organes techniques contenus dans la ou les armoires.

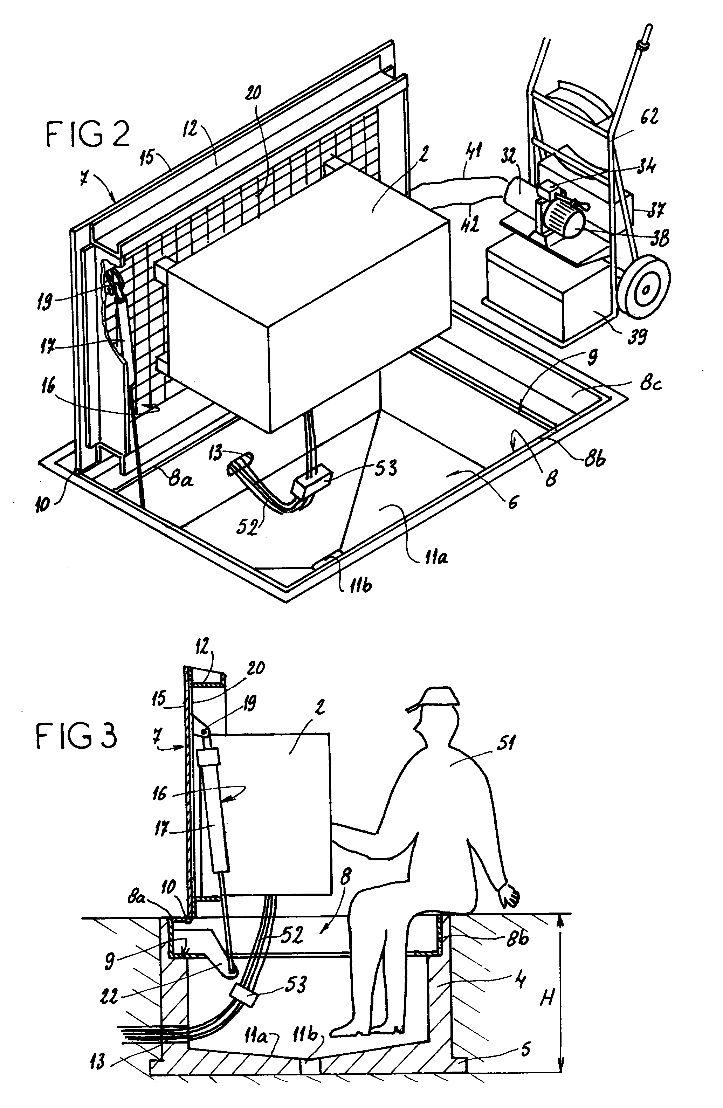

Avantageusement, la hauteur totale du caisson référencée H à la figure 3 est au plus de 60 cm. Cette hauteur réduite permet, lors de la réalisation de la fouille, d'éviter les autres réseaux souterrains qui, en général, sont situés à au moins 70 cm de la surface du sol. Elle permet aussi à sa margelle, c'est-à-dire à la surface du sol l'entourant, de constituer une assise pour le personnel d'entretien.

Comme montré aux figures 1 à 3, le cadre 8 du sous-ensemble B est composé d'un longeron 8a, ayant une section transversale en U dont la concavité est tournée vers l'intérieur du caisson, d'un longeron 8b, et de deux traverses 8c, ayant une section transversale en L dont la concavité est tournée vers l'intérieur du caisson. Le volet 7 est articulé en 10 sur le bord interne du longeron 8a. Ce volet est lui-même composé d'un cadre 12 sur lequel sont fixés, un treillis intérieur 20, servant à la fixation d'une ou de plusieurs armoires 2, et une paroi extérieure 15, constituée par exemple par une tôle nervurée anti glissement ou par un caillebotis métallique.

Il est évident que la paroi 15, de même que la face supérieure du longeron 8a du cadre 8, peuvent recevoir tout revêtement décoratif adapté à l'environnement de l'infrastructure.

Un joint d'étanchéité partielle peut être interposé entre la bordure interne du volet 7 et l'épaulement 9 du caisson 4.

La figure 2 montre que la longueur du cadre 12 du volet 7 est inférieure à la longueur de la fosse le recevant et que le sous-ensemble comporte, à proximité de chacun de ses bords latéraux, un logement 16 recevant les moyens moteurs commandant le basculement du volet.

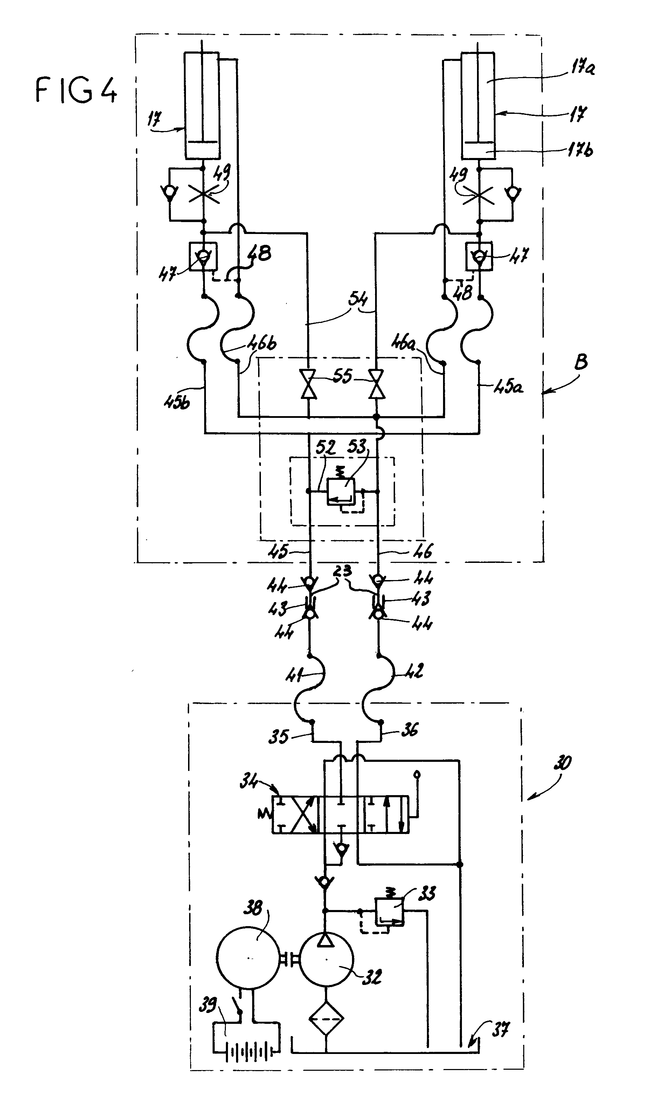

Dans la forme d'exécution représentée, ces moyens moteurs sont composés de deux vérins hydrauliques 17, à double effet, disposés dans chacun des logements 16. Le corps de chaque vérin est articulé sur une chape 19 solidaire du cadre 12, tandis que la tige est articulée (figure 3) sur une chape 22 solidaire du cadre 8 du volet 7. Les circuits d'alimentation des deux chambres 17a, 17b (figure 4) de chacun des vérins 17, aboutissent à deux raccords 23 disposés, comme montré à la figure 1, dans un puits 24 du cadre 8 ou du volet 7. Ce puits, accessible par l'extérieur, est associé à un volet d'obturation 25.

La figure 1 montre que la distance d séparant la face supérieure de l'épaulement 9 de la face supérieure du caisson 4 est sensiblement égale à l'épaisseur e du cadre 8 du volet 7, de manière que lorsque le volet est en position normale d'obturation de la fosse, sa face supérieure affleure le niveau du sol. Après sa mise en place dans le caisson, le cadre du sous-ensemble est fixé sur ce caisson par tous moyens connus, non représentés.

Dans la forme d'exécution représentée, la source d'énergie actionnant les moyens moteurs, est constituée par un groupe hydraulique 30 qui, alimentant les vérins 17, est disposé hors de l'infrastructure formée par les deux sous-ensembles A et B et est porté par un moyen mobile, présentée ici comme étant un chariot en forme de diable 62 (figure 2). Ce moyen mobile peut aussi être constitué par une structure portable à la main ou transportable dans le coffre ou sur la plate-forme d'un véhicule.

Ce moyen mobile porte également les moyens de commande déclenchant l'actionnement des moyens moteurs 17. A la figure 2, ces moyens de commande sont représentés sous la forme d'un distributeur hydraulique 34 à action manuelle, mais ils peuvent aussi être constitués par un boîtier à bouton poussoir pilotant une électrovanne.

La figure 4 montre que ce groupe hydraulique 30 comprend, de façon connue, une pompe hydraulique 32, un limiteur de pression réglable 33 et un distributeur 34 contrôlant l'alimentation de deux conduits 35 et 36. La pompe 32, qui prélève l'huile dans un réservoir 37, est entraînée en rotation par un moteur électrique 38. Dans la forme d'exécution représentée, ce moteur 38 est alimenté par une batterie 39 portée par le chariot 62.

La figure 4 montre que les conduits 35 et 36 provenant du distributeur 34 sont raccordés par des conduits flexibles, respectivement 41 et 42, à des raccords 43 munis de clapets 44 assurant leur obturation lorsqu'ils sont désaccouplés, c'est-à-dire lorsqu'ils ne sont pas connectés aux raccords 23 faisant partie de l'infrastructure de chaque fosse, et munis eux aussi de clapets 44.

Les conduits souples 41 et 42 et les raccords 43 font partie de l'équipement porté par le chariot 62.

La partie supérieure de la figure 4 représente, de manière plus détaillée, I'équipement hydraulique faisant partie du sous-ensemble B associé au volet 7. La référence 45 désigne le circuit d'alimentation des vérins 17 dans le sens de soulèvement du volet 7, tandis que celle 46 désigne le circuit d'alimentation des vérins dans le sens de l'abaissement du volet. Il est évident que chacun de ces circuits fonctionne en circuit de retour lorsque l'autre circuit fonctionne dans le sens alimentation. Chacun de ces circuits est divisé en deux branches, respectivement 45a, 46a allant à l'un des vérins et 45b et 46b allant à l'autre vérin. Chaque branche 45a ou 45b comporte un clapet anti-retour 47 avec pilotage 48 par la branche 46a ou 46b et un gicleur 49 de réglage du débit.

Lorsque le personnel chargé de l'entretien et du réglage de l'armoire de commande 2 désire accéder à cette armoire, le chariot 62 est amené à proximité de la fosse correspondante et les raccords 43 sont connectés aux raccords 23 ménagés dans le puits 24.

L'alimentation du moteur électrique 38 provoque la mise en fonctionnement de la pompe 32 et la mise en pression du circuit hydraulique. Il suffit alors d'actionner manuellement le distributeur 34, porté par le moyen mobile 62, pour envoyer le fluide sous pression, successivement, dans le conduit 35, dans le conduit souple 41, dans le circuit 45 et dans les branches 45a et 45b alimentant les chambres côté piston 17b des vérins 17. Le fluide s'échappant des chambres côté tige 17a des vérins 17 passe par les branches 46a, 46b, par le circuit 46, par le conduit flexible 42 et par le conduit 36 aboutissant au distributeur 34 et, de là, retourne au réservoir 37. Lorsque le volet 7 parvient à sa position verticale, comme montré à la figure 3, le distributeur est ramené en position neutre. Dans ces conditions, les clapets anti-retour 47 s'opposent à tout échappement du fluide contenu dans les chambres 17b des vérins et assurent donc le calage du volet en position érigée.

Il apparaît donc que, en position de fermeture, le volet 7 est calé par appui de son cadre 12 sur l'épaulement 9 du caisson 4 et que, en position érigée, il est verrouillé hydrauliquement par les clapets anti-retour 47, et cela même en cas de rupture de l'un ou l'autre des conduits 41, 42 ou en cas de désaccouplement des raccords 43.

Dans ces conditions, I'opérateur 51 peut travailler dans l'armoire sans aucun risque et de manière très aisée puisque, grâce à sa position assise sur la margelle, il accède très facilement aux composants de l'armoire disposés en face de lui.

Pour faire basculer le volet 7 dans le sens de l'obturation de la fosse, les deux vérins 17 sont alimentés par leur chambre 17a. Dans ces conditions, le fluide s'évacuant des chambres côté piston 17b s'échappe à travers les clapets anti-retour 47, qui sont alors soulevés par les circuits de pilotage 48.

Dès que la manoeuvre est terminée, il suffit de déconnecter les raccords 43 et de suspendre les conduits souples 41 et 42 sur les moyens portés par le chariot 62 pour pouvoir déplacer ce chariot vers une autre fosse.

Dans une autre forme d'exécution, le groupe hydraulique 30 est disposé dans un châssis 62, portable manuellement et ne comportant pas de batterie 39. L'alimentation du moteur électrique 38 est assurée par des câbles électriques souples munis de moyens de connexion facilitant le branchement sur les bornes de la batterie d'un véhicule.

Dans une autre forme d'exécution, les vérins hydrauliques 17 sont remplacés par des vérins électriques, ou autres actionneurs électriques, et sont alimentés, à travers des boîtiers de raccordement occupant la place des raccords 23, par des câbles électriques eux-mêmes alimentés, avec interposition d'un boîtier de commande, par une batterie disposée sur une chariot ou constituée par la batterie d'un véhicule.

On notera que quelle que soit la nature de la source d'énergie, et suivant en cela une caractéristique essentielle de l'invention, cette source d'énergie et ses moyens de commande sont extérieurs à l'infrastructure portant l'armoire de contrôle 2, et cette infrastructure est agencée de manière que les moyens moteurs assurant le pivotement du volet 7 soient inclus dans le sous-ensemble portant le volet. Cette dernière disposition permet, en cas de besoin, de substituer rapidement un sous-ensemble B par un sous-ensemble identique, par exemple en cas de défaillance d'un composant de l'armoire ou de défaillance de l'un de ses moyens moteurs. A cette fin, le sous-ensemble B est muni d'ouvertures 50 pour le passage des crochets de moyens de levage ou de grutage.

Par ailleurs, pour faciliter l'interchangeabilité des sous-ensemble B, les circuits 52 aboutissant à l'armoire 2 sont munis de moyens 53 de connexion rapide.

Dans ce type d'installation, il peut arriver qu'un évènement extérieur impose d'accéder rapidement à la fosse, par exemple en cas d'inondation ou d'incendie, ou à l'armoire de commande 2 en cas de défaillance de l'un de ses composants, alors même qu'aucun moyen mobile portant la source d'énergie n'est disponible. Pour permettre le levage du volet 7 par un moyen extérieur, tel que le bras de levage d'un engin de travaux publics, sans pour autant que le fluide déplacé par les vérins à double effet 17, et s'échappant des chambres 17a dans les branches 46a et 46b fermées par les clapets 44 provoque une surpression entraînant l'éclatement des canalisations, les deux conduites 45 et 46 sont reliées par un circuit 52 avec limiteur de pression piloté 53. Ainsi, le fluide provenant des branches 46a, 46b formant alors circuit de retour, est dirigé, par le limiteur de pression piloté 53 dans le circuit 45 et dans les branches 45a, 45b allant aux chambres côté piston 17b des vérins. Il en résulte que le fluide s'échappant des chambres 17a, ayant la plus petite section, est dirigé vers les chambres 17b, ayant la plus grande section, et que les conduits sont ainsi protégés contre toute surpression.

Pour permettre le basculement du volet 7 pour obturer la fosse, par exemple en cas de défaillance de la source d'énergie, c'est-à-dire alors que les raccords amovibles 43 sont encore connectés aux raccords fixes 23, chacune des branches 45a, 45b est raccordée à la branche 46a, 46b par un circuit 54 comportant un vanne 55 normalement fermée. Ainsi, lorsque le volet 7 est amené en position de fermeture, par exemple par poussée sur son bord libre au moyen du bras hydraulique d'un engin de travaux publics, et que préalablement les vannes 55 ont été mises en position ouverte, le fluide chassé des chambres 17b, et qui ne peut pas passer à travers le clapet anti-retour 47, est dérivé, en amont de ce clapet et va par le circuit 54, en direction du circuit 46 de retour au réservoir 37.

Il ressort de ce qui précède que l'ensemble, selon l'invention, apporte une solution efficace à l'occultation des armoires de contrôle dans les lieux publics, en mettant en oeuvre des moyens fiables, tout en limitant les coûts de fabrication et d'installation et en permettant l'échange rapide du sous-ensemble portant l'armoire.

## Revendications

1. Ensemble pour le basculement d'armoires de contrôle escamotables en fosse, du type dans lequel chaque armoire (2) est fixée contre la face interne d'un volet (7) articulé horizontalement sur le bord d'une fosse et de manière à pouvoir occuper une position escamotée, dans laquelle il obture l'ouverture de la fosse, avec l'armoire de commande à l'intérieur de celle-ci, et une position érigée, dans laquelle ce volet est sensiblement vertical avec l'armoire à l'extérieur et au-dessus de la fosse, et dans lequel des moyens (9, 44) assurent le calage du volet dans chacune de ses positions, **caractérisé en ce qu'**il comprend :
- d'une part, et pour chacune des fosses, un sous-ensemble amovible et interchangeable (8) qui, distinct du sous-ensemble (4, 5, 6) délimitant la fosse, sur lequel il est posé et fixé, est composé du volet (7) portant d'origine l'armoire et/ou d'autres organes techniques, de moyens moteurs (17) aptes à faire pivoter le volet (7) entre l'une et l'autre de ses positions extrêmes, respectivement, normale et escamotée ou temporaire et érigée, et de circuits (45, 46) assurant l'alimentation des moyens moteurs, à partir de moyens de raccordement (23), faisant partie du sous-ensemble (8) et accessibles depuis l'extérieur de la fosse
- et, d'autre part, un moyen (32) mobile entre les différentes fosses, commun à toutes ces fosses et portant une source d'énergie (32), un circuit d'alimentation muni de moyens de raccordement (43), complémentaires de ceux (23) des sous-ensembles (8), et des moyens de commande (34) de l'alimentation en énergie du circuit d'alimentation.

2. Ensemble selon la revendication 1, **caractérisé en ce que** chaque volet (7) est articulé sur un cadre (8) et celui-ci est posé sur un épaulement interne (9) qui est espacé du bord supérieur de ce caisson par une distance (d) de valeur sensiblement égale à celle de l'épaisseur (e) de ce cadre (8).

3. Ensemble selon l'une quelconque des revendications 1 et 2, **caractérisé en** **ce que** la profondeur totale du caisson (4) est au plus de 60 cm.

4. Ensemble selon l'une quelconque des revendications 1 à 3, **caractérisé en ce que** le caisson (4) est préfabriqué hors de la fouille et comporte, intérieurement, I'épaulement (9) et un fond (11) avec une forme en pente (11a) dont les faces convergent vers un orifice d'évacuation (11b) muni d'un clapet anti retour, extérieurement, une forme favorisant sa retenue dans le sol par la résultante verticale de la terre l'entourant après enfouissement et compactage, et, dans l'une de ses parois, une ouverture (13) pour le passage étanche des circuits (52) allant aux organes techniques portés par le volet (7).

5. Ensemble selon l'une quelconque des revendications 1 à 4, **caractérisé** **en ce que** les moyens moteurs du volet articulé (7) sont constitués par au moins un vérin hydraulique (17) à double effet, dont les extrémités sont respectivement articulées sur le volet (7) et sur un élément du cadre (6), et dont les circuits d'alimentation (45a, 45b, 46a, 46b) aboutissent à des raccords hydrauliques (23) avec clapets (44) d'obturation en position désaccouplée, tandis que le moyen mobile (62) porte un groupe hydraulique (30) avec ses moyens de contrôle (33) et de distribution (34), des moyens moteurs (38) d'entraînement de ce groupe, des moyens d'alimentation des moyens moteurs (38) et des conduits souples (41, 42) pour fluides hydrauliques, reliant les orifices de sortie des moyens de distribution (34) à des raccords hydrauliques (43), avec clapets (44) d'obturation en position désaccouplée.

6. Ensemble selon la revendication 5, **caractérisé en ce que** les moyens d'alimentation des moyens moteurs (38) du groupe hydraulique (30) sont constitués par une source de courant continu (39) portée par un chariot, portant également le groupe hydraulique (30) et ses moyens de contrôle, ses moyens de distribution et les conduits souples pour fluide (41, 42).

7. Ensemble selon la revendication 5, **caractérisé en ce que** le groupe hydraulique (30), ses moyens de contrôle, ses moyens de distribution (34), et les conduits souples pour fluide (41, 42) sont portés par un châssis portable à la main, et les moyens d'alimentation des moyens moteurs (38) du groupe hydraulique sont constitués par des câbles électriques raccordables à la batterie d'un véhicule.

8. Ensemble selon l'une quelconque des revendications 5 à 7, **caractérisé en ce que** les moyens de calage en position ouverte du volet (7) sont constitués, pour chaque vérin (17), par un clapet anti-retour (47) qui, disposé sur le circuit alimentant le vérin pour l'érection du volet (7), est relié par un circuit de pilotage (48) à l'autre circuit aboutissant au même vérin (17).

9. Ensemble selon l'une quelconque des revendications 1 à 4, **caractérisé en ce que** les moyens moteurs du volet articulé de chaque fosse sont constitués par au moins un actionneur ou vérin électrique, interposé entre le volet (7) et le cadre (8) et dont les circuits d'alimentation aboutissent à des bornes de connexion, tandis que le moyen mobile (62) porte une source autonome de courant électrique raccordée, avec interposition de moyens de commutation, à des câbles électriques souples munis de bornes de connexion, complémentaires de celles des fosses.
